# EUROPÄISCHE PATENTSCHRIFT

(11) **EP 1 679 860 B1**
(45) Veröffentlichungstag und Bekanntmachung des Hinweises auf die Patenterteilung: **15.12.2010**
(21) Anmeldenummer: 06000241.7
(22) Anmeldetag: 07.01.2006
(51) Int. Cl.: H04M 1/02, H04M 1/725

(54) **Mobiles Endgerät mit Anwendungen abhängig von den Anordnungen zweier Gehäuseteilen**
Mobile device with applications dependent on the arrangement of two parts of the housings
Dispositif mobile avec des applications dépendantes de l'arrangement de deux pièces de boîtier

(30) Priorität: 11.01.2005 DE 102005001357
(43) Veröffentlichungstag der Anmeldung: 12.07.2006
(73) Patentinhaber: Vodafone Holding GmbH, 40213 Düsseldorf (DE)
(72) Erfinder: Rasmussen, Sten, 40479 Düsseldorf (DE)
(74) Vertreter: Weisbrodt, Bernd

(56) Entgegenhaltungen:
- EP-A- 1 052 580
- WO-A-03/043356
- US-A1- 2004 014 485
- US-A1- 2004 203 669
- US-B1- 6 434 371

## Beschreibung

Die vorliegende Erfindung betrifft ein mobiles Endgerät zur Nutzung in Telekommunikationsnetzen, insbesondere in Mobilfunknetzen, mit einem aus wenigstens zwei relativ zueinander anordbaren Gehäuseteilen bestehenden Gehäuse, welches Mittel für eine Wiedergabe und/oder Erfassung von akustischen und/oder optischen Informationen aufweist, wobei durch die relative Anordnung der Gehäuseteile des Gehäuses zueinander wenigstens zwei unterschiedliche Funktionszustände des mobilen Endgerätes einnehmbar sind.

Derartige mobile Endgeräte sind im Stand der Technik in zahlreichen Ausgestaltungen, insbesondere als Mobilfunktelefon, und für unterschiedlichste Anwendungen bekannt, beispielsweise aus der DE 198 23 882 A1. Dabei sind in der Regel in zwei relativ zueinander durch Verschwenken, Verdrehen und/oder Verschieben zwischen zwei Positionen bewegbaren Gehäuseteilen des mobilen Endgerätes die für eine Kommunikation erforderlichen Komponenten, neben Sende- und/oder Empfangseinrichtungen insbesondere Lautsprecher, Mikrofon, Tasten und/oder Anzeigeeinrichtungen als Mittel zur Wiedergabe oder Erfassung von akustischen und/oder optischen Informationen, untergebracht. Dabei geben die beiden relativen Positionen der Gehäuseteile des Gehäuses zueinander Funktionszustände des mobilen Endgerätes vor.

Beispielsweise sind in der einen, insbesondere als geschlossen zu bezeichnenden Position der Gehäuseteile des Gehäuses des mobilen Endgerätes die Anzeigeeinrichtung und die Tasten des mobilen Endgerätes nicht zugänglich, so dass das mobile Endgerät in dieser Position der Gehäuseteile einen Funktionszustand einnimmt bzw. einnehmen kann, in dem dieses Kommunikationsinformationen, beispielsweise Anrufe, nur empfangen kann. In der anderen, insbesondere als geöffnet zu bezeichnenden Position der Gehäuseteile des Gehäuses des mobilen Endgerätes sind die Anzeigeeinrichtung und die Tasten des mobilen Endgerätes zugänglich, so dass der Nutzer des mobilen Endgerätes Kommunikationsinformationen, beispielsweise Anrufe entgegennehmen und/oder tätigen kann. Ferner sind in dieser Position auch andere Funktionen und/oder Anwendungen des mobilen Endgerätes nutzbar und/oder ausführbar, beispielsweise Unterhaltungszwecken dienende, seitens des mobilen Endgerätes implementierte Spiele, das Schreiben von Nachrichten wie sogenannte SMS, oder dergleichen Funktionen und/oder Anwendungen.

Nachteilig bei den bisher bekannten mobilen Endgeräten der Eingangs genannten Art ist, dass die von diesen entsprechend einnehmbaren Funktionszustände hinsichtlich ihrer Anzahl und der Möglichkeiten der Einnahme der Funktionszustände beschränkt sind. Ferner sind die einnehmbaren Funktionszustände fest vorgegeben und können insbesondere nicht durch den Nutzer ausgewählt oder selbst bestimmt werden.

Vor diesem Hintergrund liegt der vorliegenden Erfindung die **Aufgabe** zugrunde, ein mobiles Endgerät der Eingangs genannten Art bereitzustellen, bei welchem unter Meidung der beschriebenen Nachteile eine verbesserte und umfangreichere Einnahme von Funktionszuständen des mobilen Endgerätes erzielbar ist.

Zur technischen **Lösung** dieser Aufgabe wird ein mobiles Endgerät zur Nutzung in Telekommunikationsnetzen, insbesondere Mobilfunknetzen, mit einem aus wenigstens zwei relativ zueinander anordbaren Gehäuseteilen bestehenden Gehäuse, welches Mittel für eine Wiedergabe und/oder Erfassung von akustischen und/oder optischen Informationen aufweist, wobei durch die relative Anordnung der Gehäuseteile des Gehäuses zueinander wenigstens zwei unterschiedliche Funktionszustände des mobilen Endgerätes einnehmbar sind, vorgeschlagen, bei dem die Funktionszustände des mobilen Endgerätes benutzerindividuell vorgebbar sind.

Der Erfindung liegt die Erkenntnis zugrunde, dass eine verbesserte und umfangreichere Einnahme von Funktionszuständen des mobilen Endgerätes dadurch erzielbar ist, dass diese seitens des mobilen Endgerätes von dem jeweiligen Benutzer individuell vorgebbar sind. Dadurch kann der Nutzer eines erfindungsgemäßen mobilen Endgerätes die Funktionszustände und vorteilhafterweise auch die für deren Einnahme erforderlichen Funktionseingaben, beispielsweise Veränderungen der relativen Positionen der bewegbaren Gehäuseteile des Gehäuses des mobilen Endgerätes zueinander durch Verschwenken, Verdrehen und/oder Verschieben, selbst bestimmen und das mobile Endgerät entsprechend programmieren. Das erfindungsgemäße mobile Endgerät kann so einen zuvor von dem Nutzer vorgegebenen Funktionszustand erkennen und entsprechend der Vorgabe bei entsprechender Funktionseingabe seitens des mobilen Endgerätes diesen Funktionszustand selbstständig einnehmen. Das erfindungsgemäße mobile Endgerät weiß damit quasi, was der Nutzer bei entsprechender Funktionseingabe wünscht bzw. welche Funktion des mobilen Endgerätes kommen, das heißt nutzbar sein soll. Die benutzerindividuelle Vorgabe bzw. Programmierung erfolgt vorteilhafterweise seitens eines Menüs des mobilen Endgerätes, wobei einzunehmende bzw. einnehmbare Funktionszustände des mobilen Endgerätes und mögliche Funktionseingaben zur Einnahme von Funktionszuständen für eine Zuordnungsauswahl angeboten werden.

In einer vorteilhaften Ausgestaltung der Erfindung erfolgt die Vorgabe der Funktionszustände durch das Nutzungsverhalten des Nutzers des mobilen Endgerätes hinsichtlich der Nutzung des mobilen Endgerätes. Das mobile Endgerät ist dazu vorteilhafterweise in der Lage Funktionszustände und denen vorhergehende Funktionseingaben des Nutzers zu erfassen und einander zuzuordnen, vorteilhafterweise seitens eines dafür vorgesehenen Speichermittels des mobilen Endgerätes, und bei späteren Funktionseingaben einen entsprechend zugeordneten Funktionszustand einzunehmen. Das mobile Endgerät erfasst so quasi selbstständig Vorlieben des Nutzers hinsichtlich der Nutzung des mobilen Endgerätes.

In einer weiteren vorteilhaften Ausgestaltung der Erfindung unterliegen die Funktionszustände zeitlichen und/oder örtlichen Vorgaben, die vorzugsweise einstellbar und/oder individuell vorgebbar sind. Durch die erfindungsgemäße Nutzung bzw. Berücksichtigung von zeitlichen und/oder örtlichen Vorgaben ist Grad der Individualisierbarkeit hinsichtlich der Einnahme von Funktionszuständen des mobilen Endgerätes weiter steiger- und verbesserbar. So kann das mobile Endgerät beispielsweise zu bestimmten Zeiten, beispielsweise Uhrzeiten an Wochenenden bzw. an Werktagen, und/oder an bestimmten Orten, beispielsweise am Arbeitsplatz des Nutzers oder bei diesem Zuhause, bei einer Funktionseingabe seitens des mobilen Endgerätes unterschiedliche Funktionszustände einnehmen.

In einer besonders vorteilhaften Ausgestaltung der Erfindung sind bestimmte Muster von Nutzungen des mobilen Endgerätes Funktionszuständen im Rahmen einer Zuordnung vorgebbar bzw. programmierbar, vorzugsweise kombinativ mit zeitlichen und/oder örtlichen Vorgaben. Dadurch ist der Grad der Nutzungsindividualisierung des mobilen Endgerätes weiter steigerbar.

Eine weitere vorteilhafte Ausgestaltung der Erfindung ist gekennzeichnet durch wenigstens eine vorzugsweise an einer Außenoberfläche des Gehäuses angeordnete Taste durch welche bei Betätigung wenigstens ein weiterer Funktionszustand des mobilen Endgerätes durch die relative Anordnung der Gehäuseteile des Gehäuses zueinander einnehmbar ist. Eine konkrete Ausgestaltung der Erfindung ist gekennzeichnet durch kombinative Betätigung wenigstens zweier Tasten zur Einnahme weiterer Funktionszustände des mobilen Endgerätes durch relative Anordnung der Gehäuseteile des Gehäuses zueinander. In einer bevorzugten Ausgestaltung der Erfindung sind die Kombinationen der zu betätigenden Tasten einstellbar und/oder vorgebbar, vorzugsweise nach Reihenfolge, Anzahl und/oder zeitlicher Dauer der Betätigung. Dadurch sind vorteilhafterweise bestimmte Tastenkombinationen nach Art eines Musters für eine erfindungsgemäße Funktionszustandszuordnung des mobilen Endgerätes nutzbar und deren Anzahl und Nutzungsmöglichkeiten insgesamt weiter steigerbar und verbesserbar. So kann beispielsweise bei Veränderung der relativen Positionen der bewegbaren Gehäuseteile des Gehäuses des mobilen Endgerätes zueinander durch Verschwenken, Verdrehen und/oder Verschieben bei einer bestimmten Tastenbetätigung bzw. einer Betätigung einer bestimmten Tastenkombination beispielsweise ein Anruf angenommen werden und bei einer anderen bestimmten Tastenbetätigung bzw. einer Betätigung einer bestimmten Tastenkombination bei gleicher Veränderung der relativen Positionen der bewegbaren Gehäuseteile des Gehäuses des mobilen Endgerätes zueinander durch Verschwenken, Verdrehen und/oder Verschieben beispielsweise ein Unterhaltungszwecken dienendes Spiel oder Video, oder dergleichen Funktionalität des mobilen Endgerätes gestartet werden.

In einer vorteilhaften Ausgestaltung der Erfindung weist das Gehäuse des mobilen Endgerätes zwei zwischen zwei Positionen relativ zueinander bewegbare Gehäuseteile auf, wobei durch die beiden Positionen jeweils ein Funktionszustand des mobilen Endgerätes einnehmbar ist. Eine bevorzugte Ausgestaltung der Erfindung ist gekennzeichnet durch ein Verschwenken, Verdrehen und/oder Verschieben als relative Bewegung der Gehäuseteile des Gehäuses zueinander. Eine weitere vorteilhafte Ausgestaltung der Erfindung ist gekennzeichnet durch wenigstens eine Einnahme eines Funktionszustandes des mobilen Endgerätes durch eine zwischen den beiden Positionen der Gehäuseteile des Gehäuses liegende Position der Gehäuseteile des Gehäuses. Unter einer zwischen den beiden Positionen der Gehäuseteile des Gehäuses liegenden Position der Gehäuseteile des Gehäuses wird dabei im Sinne der vorliegenden Erfindung eine Position der Gehäuseteile des Gehäuses des mobilen Endgerätes verstanden, die im Rahmen der relativen Bewegung der Gehäuseteile des Gehäuses zueinander durch ein Verschwenken, Verdrehen und/oder Verschieben einnehmbar ist. Dadurch sind die Anzahl und die Möglichkeiten von Funktionszustandszuordnungen weiter steigerbar und verbesserbar.

Eine weiterer besonders vorteilhafter Vorschlag der Erfindung sieht vor, dass die Gehäuseteile des mobilen Endgerätes steckbar miteinander verbindbar sind. Dabei ist die Steckbarkeit der die für eine Kommunikation erforderlichen Komponenten aufweisenden Gehäuseteile des mobilen Endgerätes vorzugsweise in verschiedenen Positionen ermöglicht, so dass aufgrund der Steckbarkeit in unterschiedlichen Positionen der Gehäuseteile des mobilen Endgerätes zueinander unterschiedliche Funktionszustände einnehmbar sind.

Zur weiteren Verbesserung der Bedienbarkeit des mobilen Endgerätes weist dieses vorteilhafterweise an einer Außenoberfläche des Gehäuses, vorzugsweise im Bereich der Anschlussmittel für ein Ladegerät bzw. einer Ladestation zum elektrischen Laden eines Akkumulators des mobilen Endgerätes zur elektrischen Energieversorgung desselben, ein Schaltmittel, vorzugsweise einen Taster, auf durch welches bei bzw. nach Betätigung des Schaltmittels das mobile Endgerät zumindest für eine vorgebbare Zeitdauer und/oder eine Funktion in einen Funktionszustand versetzbar ist, der eine standardisierte Bedienung des mobilen Endgerätes entsprechend einem Auslieferungs- oder Grundzustand des mobilen Endgerätes ermöglicht, quasi nach Art einer Rücksetzung (sogenannter Reset) auf Zeit oder für eine bestimmte Funktion bzw. Funktionshandlung. Dadurch ist bzw. wird das mobile Endgerät für den Nutzer insbesondere dann bedienbar, wenn dieser benutzerindividuell vorgegebene Funktionszustände bzw. deren Zuordnung vergessen haben sollte, die eine standardgemäße Bedienung des mobilen Endgerätes verhindern. Ferner kann das mobile Endgerät so auch zumindest kurzfristig von anderen Dritten standardgemäß genutzt werden, ohne dass diese Kenntnisse von benutzerindividuellen Vorgaben haben müssen.

In einer besonders bevorzugten Ausgestaltung der Erfindung ist das mobile Endgerät ein in einem Mobilfunknetz betreibbares Mobilfunktelefon, vorzugsweise ein Multimedia-Mitteilungsdienst (MMS)-fähiges Mobilfunktelefon mit integrierter digitaler Kamera.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematisch perspektivischen Ansicht ein Ausführungsbeispiel eines erfindungsgemäßen mobilen Endgerätes in einem ersten Funktionszustand;
- Fig. 2: in einer schematisch perspektivischen Ansicht das mobile Endgerät gemäß Fig. 1 in einem zweiten Funktionszustand;
- Fig. 3: in einer schematischen Draufsicht das mobile Endgerät gemäß Fig. 1 mit einem ersten Ausführungsbeispiel für den ersten Funktionszustand und
- Fig. 4: in einer schematischen Draufsicht das mobile Endgerät gemäß Fig. 1 mit einem zweiten Ausführungsbeispiel für den ersten Funktionszustand.

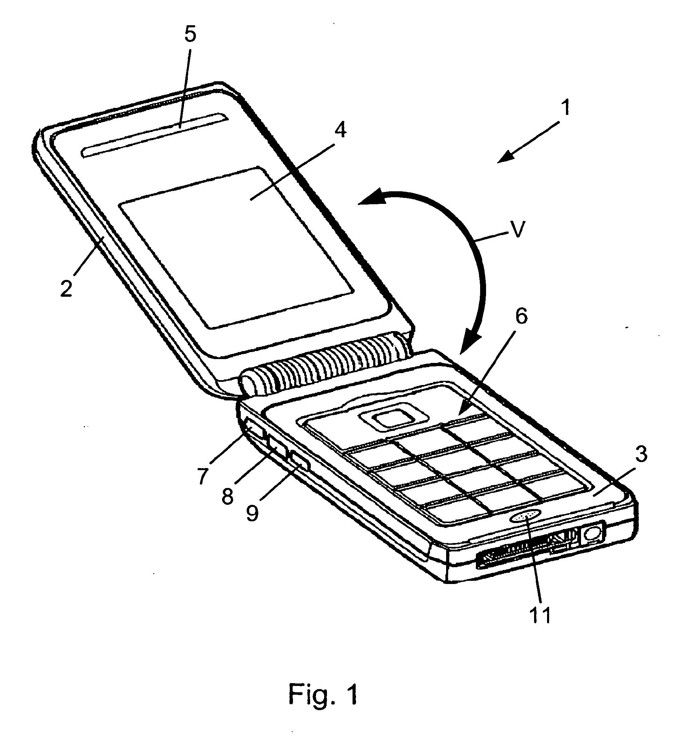

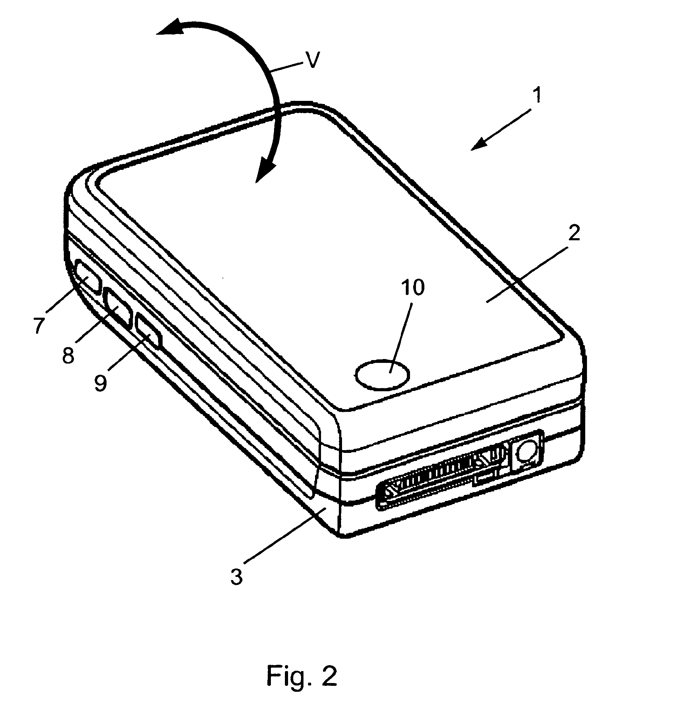

Die Figuren 1 bis 4 zeigen ein in einem Mobilfunknetz betreibbares mobiles Endgerät 1, vorliegend ein Mobilfunktelefon 1. Bei dem Mobilfunktelefon 1 handelt es sich um ein sogenanntes klappbares Mobilfunktelefon 1, welches ein aus zwei durch Verschwenken gegeneinander bzw. umeinander relativ zueinander anordbaren Gehäuseteilen 2 und 3 bestehendes Gehäuse aufweist. Die Verschwenkbarkeit der Gehäuseteile 2 und 3 gegeneinander bzw. umeinander ist in den Figuren 1 und 2 durch den mit V gekennzeichneten Doppelpfeil dargestellt.

Das Gehäuseteil 2 des Gehäuses des Mobilfunktelefons 1 weist auf der dem Gehäuseteil 3 im Rahmen der Verschwenkung V zugewandten Seite als Mittel 4 und 5 zur Wiedergabe von akustischen und/oder optischen Informationen ein Display 4 als Anzeigeeinrichtung und einen Lautsprecher bzw. eine Hörmuschel 5 zur akustischen Wiedergabe von Audiosignalen auf, wie anhand von Fig. 1, 3 und 4 ersichtlich. Auf der dem Gehäuseteil 3 im Rahmen der Verschwenkung V abgewandten Seite weist das Gehäuseteil 2 des Gehäuses des Mobilfunktelefons 1 als Mittel 10 zur Erfassung von optischen Informationen eine seitens des Mobilfunktelefons 1 integrierte digitale Kamera bzw. deren Kameralinse 10 auf, wie anhand von Fig. 2 ersichtlich.

Das Gehäuseteil 3 des Gehäuses des Mobilfunktelefons 1 weist auf der dem Gehäuseteil 2 im Rahmen der Verschwenkung V zugewandten Seite als Mittel 6 und 11 zur Erfassung von akustischen und/oder optischen Informationen eine mehrere Tasten umfassende Tastatur 6 als Eingabeeinrichtung und ein Mikrofon zur Erfassung akustischer Signale auf, wie anhand von Fig. 1, 3 und 4 ersichtlich. Weiter weist das Gehäuseteil 3 des Gehäuses des Mobilfunktelefons 1 an der in den Figuren 1 bis 4 links gelegenen Außenoberfläche des Gehäuses angeordnete Tasten 7, 8 und 9 auf.

Bei dem vorliegenden Mobilfunktelefon 1 sind durch Verschwenkung V der beiden Gehäuseteile 2 und 3 zueinander vorliegend zwei Funktionszustände des Mobilfunktelefons 1 einnehmbar. In dem in Fig. 1 dargestellten, als aufgeklappt zu bezeichnenden ersten Funktionszustand des Mobilfunktelefons 1, sind das in dem Gehäuseteil 2 angeordnete Display 4 und der Lautsprecher bzw. die Hörmuschel 5 sowie die in dem Gehäuseteil 3 angeordnete Tastatur 6 und das Mikrofon 11 für den Nutzer zugänglich. In dem in Fig. 2 dargestellten, als zugeklappt zu bezeichnenden zweiten Funktionszustand des Mobilfunktelefons 1, sind das in dem Gehäuseteil 2 angeordnete Display 4 und der Lautsprecher bzw. die Hörmuschel 5 sowie die in dem Gehäuseteil 3 angeordnete Tastatur 6 und das Mikrofon 11 für den Nutzer nicht zugänglich.

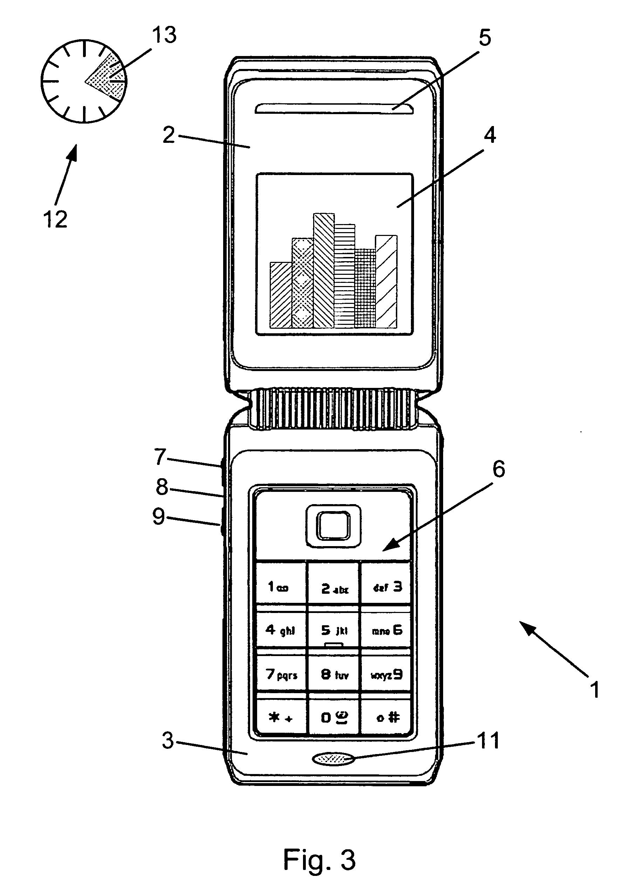

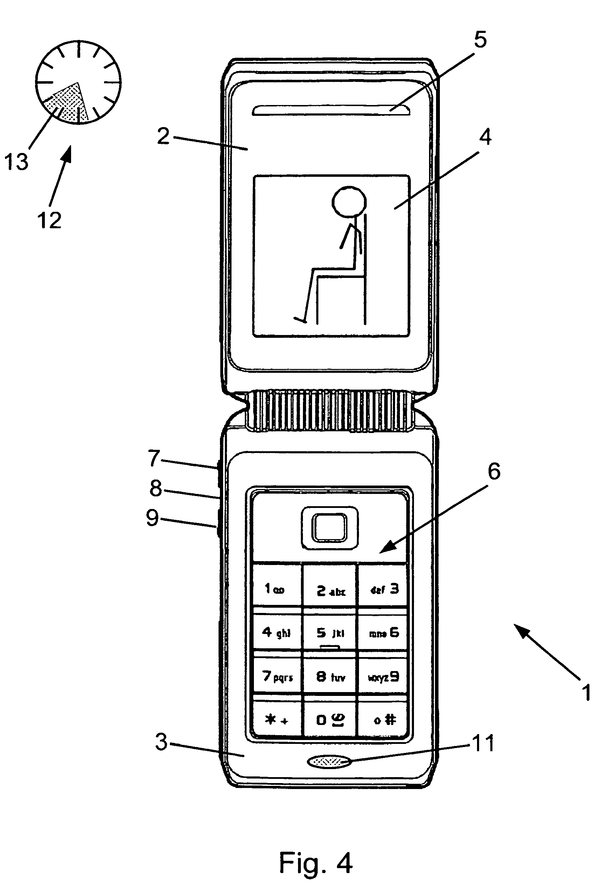

Die Figuren 3 und 4 zeigen jeweils ein Ausführungsbeispiel für im Rahmen des ersten Funktionszustandes des Mobilfunktelefons 1 gemäß Fig. 1 einnehmbare vom Nutzer des Mobilfunktelefons 1 individuell vorgebbare Funktionszustände. Vorliegend handelt es sich dabei um bei und/oder mit dem sogenannten Aufklappen des Mobilfunktelefons 1 durch entsprechende Verschwenkung der Gehäuseteile 2 und 3 gegeneinander von dem in Fig. 2 dargestellten Funktionszustand in den in Fig. 1 dargestellten Funktionszustand bei gleichzeitiger und/oder nach Betätigung der Taste 8 in Abhängigkeit von der Tageszeit - in Fig. 3 und Fig. 4 durch die symbolisierte Uhr 12 dargestellt - aufgerufene bzw. aktivierte Funktionen in den jeweiligen Funktionszuständen. Diese Funktionen stellen im Sinne der vorliegenden Erfindung weitere Funktionszustände dar.

Bei dem in Fig. 3 dargestellten Ausführungsbeispiel hat der Nutzer des Mobilfunktelefons 1 dieses derart benutzerindividuell programmiert, dass bei und/oder mit dem Aufklappen bei gleichzeitiger und/oder nach Betätigung der Taste 8 innerhalb des Zeitbereichs 13 seitens des Mobilfunktelefons 1 ein Softwareprogramm oder dergleichen Applikation, vorliegend eine seitens des Mobilfunktelefons 1 implementierte Kalkulationsanwendung, aufgerufen bzw. gestartet wird. Seitens des Displays 4 des Mobilfunktelefons 1 ist in Fig. 3 dementsprechend ein Kalkulationsergebnis grafisch als Balkendiagramm dargestellt. Das Mobilfunktelefon 1 weiß damit, dass der Nutzer zu einer Uhrzeit gemäß Zeitbereich 13 - vorliegend beispielsweise während der Arbeitszeit des Nutzers - eine bestimmte Anwendung - vorliegend eine Kalkulationsanwendung - als Funktionszustand wünscht.

Bei dem in Fig. 4 dargestellten Ausführungsbeispiel hat der Nutzer des Mobilfunktelefons 1 dieses derart benutzerindividuell programmiert, dass bei und/oder mit dem Aufklappen bei gleichzeitiger und/oder nach Betätigung der Taste 8 innerhalb des Zeitbereichs 13 seitens des Mobilfunktelefons 1 eine andere Applikation, vorliegend eine Nutzung der seitens des Mobilfunktelefons 1 integrierten digitalen Kamera 10, aufgerufen bzw. gestartet wird. Seitens des Displays 4 des Mobilfunktelefons 1 ist in Fig. 4 dementsprechend das von der digitalen Kamera 10 des Mobilfunktelefons 1 erfasste Bild - vorliegend eine auf einem Stuhl sitzende Person - symbolisch dargestellt. Das Mobilfunktelefon 1 weiß damit entsprechend, dass der Nutzer zu einer Uhrzeit gemäß Zeitbereich 13 - vorliegend beispielsweise während nach der Arbeitszeit des Nutzers - eine bestimmte Anwendung - vorliegend die Funktion der Kamera - als Funktionszustand wünscht.

Die in den Figuren dargestellten Ausführungsbeispiele der Erfindung dienen lediglich der Erläuterung der Erfindung und sind für diese nicht beschränkend.

### Bezugszeichenliste

- 1: mobiles Endgerät/Mobilfunktelefon
- 2: Gehäuseteil (mobiles Endgerät (1))
- 3: Gehäuseteil (mobiles Endgerät (1))
- 4: Anzeigeeinrichtung/Display (Gehäuseteil (2))
- 5: Lautsprecher/Hörmuschel (Gehäuseteil (2))
- 6: Eingabeeinrichtung/Tastatur (Gehäuseteil (3))
- 7: Funktionstaste (Gehäuseteil (3))
- 8: Funktionstaste (Gehäuseteil (3))
- 9: Funktionstaste (Gehäuseteil (3))
- 10: Kamera/Kameralinse (Gehäuseteil (2))
- 11: Mikrofon (Gehäuseteil (3))
- 12: Uhrzeit
- 13: Zeitbereich
- V: Verschwenkung

## Patentansprüche

1. Mobiles Endgerät (1) zur Nutzung in einem Mobilfunknetz, mit einem aus wenigstens zwei zwischen zwei Positionen relativ zueinander bewegbaren Gehäuseteilen (2, 3) bestehenden Gehäuse, welches Mittel (4, 5, 6, 11) für eine Wiedergabe und/oder Erfassung von akustischen und/oder optischen Informationen aufweist, wobei durch die beiden Positionen der Gehäuseteile (2, 3) des Gehäuses jeweils wenigstens ein unterschiedlicher Funktionszustand des mobilen Endgerätes (1) einnehmbar ist und wobei wenigstens eine zwischen den beiden Positionen der Gehäuseteile (2, 3) des Gehäuses liegende Position der Gehäuseteile (2, 3) des Gehäuses zur Einnahme wenigstens eines weiteren Funktionszustandes des mobilen Endgerätes (1) vorgesehen ist, wobei die Funktionszustände des mobilen Endgerätes (1) benutzerindividuell vorgebbar sind,
**dadurch gekennzeichnet, dass**
die Vorgabe der Funktionszustände durch das Nutzungsverhalten des Nutzers des mobilen Endgerätes (1) hinsichtlich der Nutzung des mobilen Endgerätes (1) erfolgt,
indem das mobile Endgerät (1) dazu ausgelegt ist Funktionszustände und denen vorhergehende Funktionseingaben des Nutzers zu erfassen und einander zuzuordnen und bei späteren Funktionseingaben einen entsprechend zugeordneten Funktionszustand einzunehmen.

2. Mobiles Endgerät (1) nach Anspruch 1, **dadurch gekennzeichnet, dass** die Funktionszustände zeitlichen und/oder örtlichen Vorgaben unterliegen.

3. Mobiles Endgerät (1) nach Anspruch 2, **dadurch gekennzeichnet, dass** die Vorgaben einstellbar und/oder vorgebbar sind.

4. Mobiles Endgerät (1) nach einem der Ansprüche 1 bis 3, **gekennzeichnet durch** ein Verschwenken (V), Verdrehen und/oder Verschieben als relative Bewegung der Gehäuseteile (2, 3) des Gehäuses zueinander.

## Claims

1. A mobile terminal (1) for the use in a mobile network, comprising a housing composed of at least two housing parts (2, 3) which can be displaced relative to each other between two positions, which terminal comprises means (4, 5, 6, 11) for the reproduction and/or gathering of acoustic and/or optical information, wherein respectively at least one different functional state of said mobile terminal (1) can be adopted by means of the two positions of the housing parts (2, 3) of said housing, and wherein at least one position of the housing parts (2, 3) of said housing is provided between the two positions of the housing parts (2, 3) of said housing for adopting at least one other functional state of said mobile terminal (1), wherein the functional states of said mobile terminal (1) can be user-individually predetermined,
**characterized in that**
the functional states are predetermined by the utilization behavior of the user of said mobile terminal (1) with respect to the use of said mobile terminal (1), **in that** said mobile terminal (1) is adapted to gather functional states and preceding functional inputs of the user and to allocate these ones to each other and to adopt a correspondingly allocated functional state in consequence of later functional inputs.

2. A mobile terminal (1) according to claim 1, **characterized in that** the functional states are subject to temporal and/or local predefinitions.

3. A mobile terminal (1) according to claim 2, **characterized in that** the predefinitions can be set and/or predetermined.

4. A mobile terminal (1) according to one of the claims 1 through 3, **characterized by** a horizontal swing (V), torsion and/or displacement as relative motion of the housing parts (2, 3) of said housing with respect to each other.

## Revendications

1. Terminal mobile (1) pour l'utilisation dans un réseau mobile, comprenant un boîtier composé d'au moins deux pièces de boîtier (2, 3) qu'on peut déplacer relativement l'une par rapport à l'autre entre deux positions, le terminal comprenant des moyens (4, 5, 6, 11) pour la reproduction et/ou la saisie des informations acoustiques et/ou optiques, dans lequel les deux positions des pièces de boîtier (2, 3) du boîtier permettent de prendre au moins un état fonctionnel respectivement différent du terminal mobile (1), et dans lequel au moins une position des pièces de boîtier (2, 3) du dit boîtier est prévue entre les deux positions des pièces de boîtier (2, 3) du boîtier pour prendre au moins un autre état fonctionnel du terminal mobile (1), les états fonctionnels du dit terminal mobile (1) pouvant être prédéterminés individuellement selon l'utilisateur,
**caractérisé en ce que**
les états fonctionnels sont prédéterminés par le comportement d'utilisation de l'utilisateur du terminal mobile (1) par rapport à l'utilisation du terminal mobile (1) en ce que le terminal mobile (1) est adapté à saisir des états fonctionnels et des entrées fonctionnelles de l'utilisateur précédant ceux-ci et à les attribuer les uns aux autres et à prendre un état fonctionnel conformément attribué par suite des entrées fonctionnelles postérieures.

2. Terminal mobile (1) selon la revendication 1, **caractérisé en ce que** les états fonctionnels sont soumis à des prédéfinitions temporelles et/ou locales.

3. Terminal mobile (1) selon la revendication 2, **caractérisé en ce que** les prédéfinitions peuvent être ajustées et/ou prédéterminées.

4. Terminal mobile (1) selon l'une des revendications 1 à 3, **caractérisé par** un balayage horizontal (V), une torsion et/ou une translation en tant que déplacement relatif des pièces de boîtier (2, 3) du boîtier les unes par rapport aux autres.
